(19) Europäisches Patentamt
European Patent Office
Office européen des brevets

(11) **EP 2 030 887 A1**

(12) **EUROPEAN PATENT APPLICATION**

(43) Date of publication:
**04.03.2009 Bulletin 2009/10**

(51) Int Cl.:
**B62M 1/18** *(2006.01)*

(21) Application number: **08013709.4**

(22) Date of filing: **31.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.07.2007 CN 200710044389**

(71) Applicant: **Zhao, Hai Feng**
**44141 Dormund (DE)**

(72) Inventor: **Zhao, Hai Feng**
**44141 Dormund (DE)**

(54) **A bicycle wheel assembly drive and a driving method.**

(57) This invention relates to a driving technology of wheel assembly, especially a driving method of wheel assembly and a bike driven by the method. The wheel assembly consists of a driving wheel equipped with a ratchet wheel. The driving wheel is characterized in that a rack of rectilinear motion drives the ratchet wheel, which further drives the wheel assembly. The driving method above is adopted for the driving wheel of the bike. With the invention method and structure above, in the wheel assembly driven by the rack of rectilinear motion, human's leg force can be completely converted to a moment driving the wheel assembly forward. The mechanical efficiency of the wheel assembly is higher than that of the conventional wheel assembly driven by the pedal and the chain wheel Therefore, the bike driven by the rack of rectilinear motion is labor saving and of quick movement, good entertainment and fitness effect.

Figure 2

EP 2 030 887 A1

## Description

## Technological Field

This invention relates to a driving technology of wheel assembly, especially a driving method of wheel assembly and a bike driven by the method.

## Background Technology

Bike has a history of over 200 years during which a lot of changes have been made. In 1885, a British invented a bike that had a front wheel and a rear wheel of the same size and a chain wheel with crank arms and pedals in the middle of the front wheel and the rear wheel. The rider treads on the pedals and the crank arms drive the chain wheel, which drives the rear wheel through the chain and moves the bike forward. This driving mode of bike remains unchanged to date, and is widely applied in the wheel assemblies of bikes and tricycles.

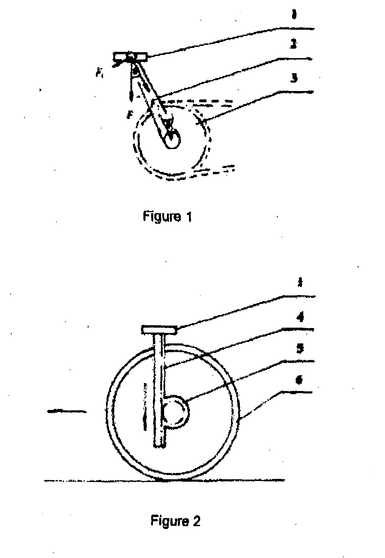

Now let's analyze the efficiency of the driving system consisted of pedals and chain wheel. Please look at Figure 1: Pedal Force Analysis Schematic Drawing. In the figure, I indicates the pedal, 2 indicates the crank arm, and 3 indicates the chain wheel; the angle between the radius and the vertical line in pedal's circular motion is θ. When the pedal 1 is in circular motion, it receives a downward force F made by a human leg, and the F is decomposed into a tangential force $F_1$ along the tangent of the circle and a normal force $F_2$ along the normal of the circle and pointing to the axle center. The tangential force $F_1$ forms the moment that drives the bike forward, while the normal force $F_2$ is wasted because no moment can be formed since it points to the axle center. From 0 to $\pi$, the leg force applies work, the tangential force $F_1$ drives the bike forward; the phase from $\pi$ to $2\pi$ is a return stroke, in which the leg force applies no work. From 0 to $\pi$, by applying work with left and right leg alternatively, the bike is driven forward by the tangential force $F_1$.

When θ changes from 0 to $\pi$, calculate the average value $\overline{F}_1$ of $F_1$:

It can be worked out from Figure 1:

$$F_1 = F Sin\theta$$

$$\overline{F}_1 = \frac{F}{b-a}\int_a^b Sin\theta d\theta = \frac{F}{\pi-0}\int_0^\pi Sin\theta d\theta$$

$$\overline{F}_1 = \frac{F}{\pi}\left(-COS\theta\Big|_0^\pi\right) = \frac{F}{\pi}[-(-1-1)]$$

$$\overline{F}_1 = \frac{2}{\pi}F \cong 0.637F$$

It can be seen from the equations above that in the wheel assembly driven by a traditional pedal chainwheel, only 63.7% of leg force F forms the moment that drives the wheel assembly forward, while the rest 36.3% is wasted.

## Contents of the Invention

The invention intends to provide a wheel assembly driving method and a bike that adopts this driving method. It mainly solves defects in existing ' technologies and is characterized by advantages of labor-saving ride and quick movement.

In order to achieve the purpose above, this invention is carried out as ' follows:

A wheel assembly driving method (the wheel assembly includes a driving wheel with a ratchet wheel) is characterized in that a rack of rectilinear motion drives the ratchet wheel, and the ratchet wheel further drives the wheel assembly. The ratchet wheel has the same structure as the ratchet wheel mounted on the rear axle of traditional bikes. (The ratchet wheel is also called "freewheel". Since it is a commonly known component, its principle and internal structure are not described here.)

The wheel assembly driving method is characterized in that the rack is engaged at the ratchet wheel side and moves linearly in tangent direction at the engagement joint The ratchet wheel rotates in the same direction of that of traditional bikes. That is, when the rack is engaged at the left side of the ratchet wheel, the rack moves downwards to drive the rotation of the wheel and push it forward, while the rack moves upwards, it does not influence the normal movement of the wheel.

The wheel assembly driving method is characterized in that the rack is connected with a pedal.

The wheel assembly driving method is characterised in that the rectilinear motion direction of the rack is perpendicular to the ground.

A bike that is characterized in that its driving wheel adopts the driving method above.

The bike is characterized in that it consists of a frame, two handlebars, a front wheel, a rear wheel, a rear wheel fork and a seat. A set of rack driving device is mounted in the inner side of left and right arm of the rear wheel fork respectively. The rack driving device includes a rack in a metal pipe that can be moved vertically inside a metal pipe, a ratchet wheel mounted on the rear wheel and two pedals connecting the rack; an arc opening is provided at the joint of the metal pipe and the ratchet wheel so that the rack inside the metal pipe engages with the ratchet wheel.

The bike is characterized in that a long opening is made on the outer side of the lower part of the metal pipe, so that the pedals can move downwards.

The bike is characterized in that the pedals are reset via a pedal reset device. The pedal reset device has three structures: the first structure is that the metal pipe is equipped with a spring; the upper end of the spring is fixed at the top of the metal pipe and the lower end is connected to the upper end of the rack; the second structure is that the upper end of the left and right rack are connected through a steel wire; the third structure is that shoes that can be buckled with the pedals is used to reset the pedals.

With the invention method and structure above, in the wheel assembly driven by the rack of rectilinear motion, human's leg force can be completely converted to a moment driving the wheel assembly forward. The mechanical efficiency of the wheel assembly is higher than that of the conventional wheel assembly driven by the pedal and the chain wheel. Therefore, the bike driven by the rack of rectilinear motion is labor saving and of quick movement, good entertainment and fitness effect

In addition, if the wheel driven by the wheel assembly is large enough in diameter, in order to lower the center of gravity and ensure smooth driving, the pedals can also be mounted at lower end of the rack. The human leg steps the pedal downward, the pedal drives the rotation of the ratchet wheel via the rack and then rotation of the wheels, so as to drive the wheel assembly forward.

**Drawing Notes**

Figure 1: Pedal Force Analysis Schematic Drawing. In the figure, I indicates the pedal, 2 indicates the crank arm, and 3 indicates the chain-wheel; $F$ is human leg force, $F_1$ is the tangent component force of F, and $F_2$ is the normal component force of F; $\theta$ is the angle between the radius and the vertical line.

Figure 2: Schematic Drawing of the Rack of Rectilinear Motion Driving the Wheel Assembly. In the figure, I indicates the pedal, 4 indicates the rack, 5 indicates the ratchet wheel, and 6 indicates wheels. A human leg steps on the pedal 1, the pedal drives the rack 4 to move downwards, the ratchet wheel 5 drives the rotation of the wheel 6 to drive the wheel assembly forward.

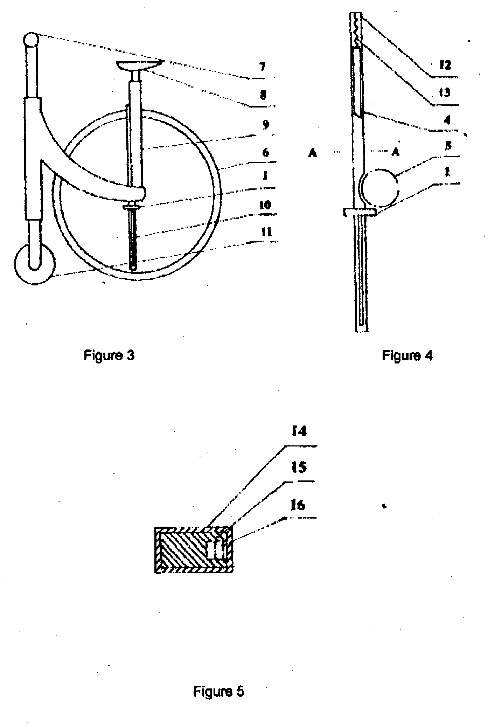

Figure 3: Schematic Drawing of a Rack Driving Bike. In the figure, 7 indicates handlebars, 8 indicates the seat, 9 indicates the left arm of the rear wheel fork, 6 indicates the rear wheel, I indicates the pedal, 10 indicates the rack driving device, 11 indicates the front wheel. The rack driving device 10 is at inner side of the left arm of the rear wheel fork 9.

Figure 4: Schematic Drawing of the Rack Driving Device 10 and the Ratchet Wheel 5. In the figure, 12 indicates the metal pipe, 13 indicates the spring, 4 indicates the rack, 5 indicates the ratchet wheel, and 1 indicates the pedal.

Figure 5: A-A Section Plan of the Metal Pipe 12 and Rack 4. In the figure, 14 is the section of the metal pipe 12, 15 is the section of the rack 4 and 16 is the teeth of the rack 4.

**Detailed Application Methods**

Please look at Figure 2, the figure shows the method of rack in rectilinear motion driving the wheel assembly. In the figure, I indicates the pedal, 4 indicates the rack, 5 indicates the ratchet wheel, and 6 indicates wheels. The ratchet wheel 5 has the same structure as the ratchet wheel mounted on the rear axle of traditional bikes, and the ratchet wheel 5 rotates in the same direction of that of traditional bikes. That is, when the rack 4 is engaged at the left side of the ratchet wheel 5, the rack 4 moves downwards to drive the rotation of the wheel and push it forward, while the rack 4 moves upwards, the ratchet wheel 5 does not influence the normal movement of the wheel 6.

In the rack driving wheel assembly shown in Figure 2, the rack 4 is installed vertically to the ground; the pedal 1 is mounted on the upper end of the rack 4, and the rack 4 is engaged at left side of the ratchet wheel 5. The human leg force is applied on the pedal 1 to make it move downwards; 100% of the human leg force is converted to a moment driving the wheel forward along the tangent direction of the ratchet wheel 5 via the rack 4.

If the wheel 6 driven by the wheel assembly is large enough in diameter, in order to lower the center of gravity and ensure smooth driving, the pedals 1 can also be mounted at lower end of the rack 4. The human leg steps the pedal 1 downward, the pedal 1 drives the rotation of the ratchet wheel 4 via the rack 4 and then rotation of the wheels 6, so as to drive the wheel assembly forward.

Please look at Figure 3, it is a schematic drawing of a rack driving bike. 7 indicates handlebars, 8 indicates the seat, 9 indicates the left arm of the rear wheel fork, 6 indicates the rear wheel, I indicates the pedal, 10 indicates the rack driving device, 11 indicates the front wheel. Figure 4 is a schematic drawing of the rack driving device 10 in the inner side of the left arm. In the figure, 12 indicates the metal pipe, 13 indicates the spring, 4 indicates the rack, 5 indicates the ratchet wheel, and 1 indicates the pedal. An arc opening is provided at the joint of the metal pipe 12 and the ratchet wheel 5 so that the rack 4 inside the metal pipe 12 engages with the ratchet wheel 5. A long opening is made on the outer side of the lower part of the metal pipe, so that the pedal 1 can move downwards. Upper end of the spring 13 is fixed at top end of the metal pipe 12, and lower end of it is connected to the rack 4; pedal 1 is mounted at lower end of the rack 4, and the rack 4 can move vertically in the metal pipe 12 flexibly. Figure 5 is an A-A section plan of the metal pipe 12 and rack 4. In the figure, 14 is the section of the metal pipe 12, 15 Is the section of the rack 4 and 16 is the teeth of the rack 4.

The rack 4 and spring 13 are included in the metal tube 12 of the rack driving device 10, and the ratchet wheel 5 is blocked by the rear wheel fork 9, so they can not be shown in Figure 3. Figure 3 and Figure 4 should be used in combination while looking at the rack driving bike. When a human leg treads on the pedal 1, the rack 4 in the rack driving device 10 drives the ratchet wheel 5, and the ratchet wheel 5 drives the rear wheel 6 to move the bike forward.

When the human leg moves upward, the spring 13 drives the rack 4 upwards, so that the pedal 1 rises with the human leg and returns to original position. Using spring to make the pedal return to original position is the first structure of the reset device. The reset device of this invention also has two forms as follows:

When the pedal reset device adopts the second steel wire structure, the steel wire connects to the upper end of the left rack and the right rack. When the left pedal moves downwards, the steel wire drives the right pedal upwards; when the right pedal moves downwards, the steel wire drives the left pedal upwards.

The pedal reset device can also be a shoe that can be buckled with the pedal, which takes the pedal to its original position when the leg rises.

In a rack driving bike, human leg force is always vertical downward and along the tangent direction of the ratchet wheel 5, so 100% of the leg force is converted to a moment driving the bike forward. The driving efficiency of the rack driving bike is 36.3% higher than that of traditional bikes.

In normal riding condition (medium speed), the rack driving bike can reach quicker speed than traditional bikes under the same force used; while moving forward at the same speed, the rack driving bike is more labor saving than traditional bikes. The rack driving bikes also has another two characters that traditional bikes do not have: 1) for a traditional bike, the rider can only apply force with left and right leg alternatively; for a rack driving bike, the rider can apply force with left and right leg at the same time to reach an extraordinary quick speed; 2) when moving ahead at low speed, for a traditional bike, the rider's left and right leg has to maintain circular movement with perimeter of $2\pi R$ (R is the distance from the pedal to the center of chain wheel axis, i.e. crank arm length); for a rack driving bike, the rider can maintain the bike's speed with very small movement of the left and right leg.

**Claims**

1. A driving method of wheel assembly. The wheel assembly consists of a driving wheel equipped with a ratchet wheel. The driving wheel is **characterized in that** a rack of rectilinear motion drives the ratchet wheel, which further drives the wheel assembly.

2. The driving method of the wheel assembly described in Patent Claim 1 is **characterised in that** the rack is engaged at one side of the ratchet wheel and moves in linear direction along the tangential direction of the engaged joint.

3. The driving method of the wheel assembly described in Patent Claim 2 is **characterized in that** the rack is connected with pedals.

4. The driving method of the wheel assembly described in Patent Claim 1, 2 and 3 is **characterized in that** the linear movement direction is vertical to the ground

5. A bike which is **characterized in that** the driving method described in Patent Claim 1, 2, 3 and 4 is applied in the driving wheel.

6. The bike described in Patent Claim 5 is **characterized in that** it consists of a frame, two handlebars, a front wheel, a rear wheel, a rear wheel fork and a seat. A set of rack driving device is mounted in the inner side of left and right arm of the rear wheel fork respectively. The rack driving device includes a rack in a metal pipe that can be moved vertically inside a metal pipe, a ratchet wheel mounted on the rear wheel and two pedals connecting the rack; an arc opening is provided at the joint of the metal pipe and the ratchet wheel so that the rack inside the metal pipe engages with the ratchet wheel.

7. The bike described in Patent Claim 6 and 7 is **characterized in that** a long opening is made on the outer side of the lower part of the metal pipe, so that the pedals can move downwards.

8. The bike described in Patent Claim 6 is **characterized in that** the metal pipe is equipped with a spring; the upper end of the spring is fixed at the top of the metal pipe and the lower end is connected to the upper end of the rack.

9. The bike described in Patent Claim 6 is **characterized by** the second form of the reset device and steel wires connected to the upper end of the left and right rack.

10. The bike described in Patent Claim 6 is **characterized by** the third form of the reset device and the shoes that can be buckled with the pedals.

Figure 1

Figure 2

Figure 3

Figure 4

Figure 5

Europäisches
Patentamt

European
Patent Office

Office européen
des brevets

# EUROPEAN SEARCH REPORT

Application Number

EP 08 01 3709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CH 208 116 A (STUCKI HEINRICH [CH]) 31 December 1939 (1939-12-31) * figures * | 1-5 | INV. B62M1/18 |
| X | DE 34 432 C (BAINES, H.) 12 May 1885 (1885-05-12) * figure 1 * | 1-5 | |
| X | DE 10 485 C (KALBHENN, J.) 14 August 1880 (1880-08-14) * figures * | 1-5 | |
| X | DE 811 196 C (MOSTER FRITZ) 16 August 1951 (1951-08-16) * figure 1 * | 1,2,5 | |
| X | CH 221 788 A (JEANNET HENRI [CH]) 15 June 1942 (1942-06-15) * figure 1 * | 1-5 | |
| X | US 3 414 293 A (FRYE KENNETH W) 3 December 1968 (1968-12-03) * figure 1 * | 1-5 | TECHNICAL FIELDS SEARCHED (IPC) B62M |
| X | US 1 597 639 A (VON GLAHN ELMER C) 24 August 1926 (1926-08-24) * figures * | 1,2,4,5 | |
| X | FR 534 977 A (DUPONT, A.) 6 April 1922 (1922-04-06) * figures * | 1,2,4,5 | |
| X | DE 103 351 C (BEIT, G.) 3 February 1897 (1897-02-03) * figures * | 1-5 | |

-/--

The present search report has been drawn up for all claims

| Place of search | Date of completion of the search | Examiner |
|---|---|---|
| The Hague | 23 January 2009 | van Rooij, Michael |

EPO FORM 1503 03.82 (P04C01)

Europäisches
Patentamt

European
Patent Office

Office européen
des brevets

**EUROPEAN SEARCH REPORT**

Application Number

EP 08 01 3709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 415 540 A (PORTNOFF LAWRENCE A) 10 December 1968 (1968-12-10) * figure 5 * ----- | 1,5 | |
| A | US 2 831 703 A (SHRIMPTON EDWIN H) 22 April 1958 (1958-04-22) * figure 1 * ----- | 1,5 | |

TECHNICAL FIELDS
SEARCHED      (IPC)

The present search report has been drawn up for all claims

| Place of search | Date of completion of the search | Examiner |
|---|---|---|
| The Hague | 23 January 2009 | van Rooij, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 01 3709

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2009

| Patent document cited in search report | | Publication date | Patent family member(s) | Publication date |
|---|---|---|---|---|
| CH 208116 | A | 31-12-1939 | NONE | |
| DE 34432 | C | | NONE | |
| DE 10485 | C | | NONE | |
| DE 811196 | C | 16-08-1951 | NONE | |
| CH 221788 | A | 15-06-1942 | NONE | |
| US 3414293 | A | 03-12-1968 | NONE | |
| US 1597639 | A | 24-08-1926 | NONE | |
| FR 534977 | A | 06-04-1922 | NONE | |
| DE 103351 | C | | NONE | |
| US 3415540 | A | 10-12-1968 | NONE | |
| US 2831703 | A | 22-04-1958 | NONE | |

EPO FORM P0459

For more details about this annex : see Official Journal of the European Patent Office, No. 12/82